# EUROPEAN PATENT APPLICATION

(11) **EP 1 801 689 A1**
(43) Date of publication of application: **27.06.2007**
(21) Application number: 05112921.1
(22) Date of filing: 23.12.2005
(51) Int. Cl.: G06F 3/00

(54) **Methods, systems and software applications including tab panel elements**

(71) Applicant: SAP AG, 69190 Walldorf (DE)
(72) Inventor: Unser, NIcole, 69226, Nussloch (DE); Deggelmann, Martin, 69190, Walldorf (DE); Schira, Thomas, 69168, Wiesloch (DE)
(74) Representative: Richardt, Markus Albert

(57) **Abstract**

A graphical user interface for defining parameters for a process to be executed by a computer is provided. The graphical user interface comprises at least two tab panel elements, each tab panel element comprising input or selection means for choosing or entering a set of attributes or values or conditions usable to carry out the process. According to an embodiment of the invention, each set of attributes or values or conditions is different to and independent of the other sets
and only the set of attributes or values or conditions of a selected tab panel element is relevant for the process.

## Description

### Technical Field

The technical field of the present invention is in the area of electronic data processing. More particularly, the invention relates to methods, computer programs, products and systems including tab panel elements, particularly as user interface elements.

### Background Information

User interfaces, such as graphical user interfaces (GUIs) provide a mechanism for a user to interact with a computer software application. A GUI typically includes various elements that display information to and/or receive input from a user. GUI elements are sometimes referred to guess widgets end may include custom user interface components or standard components such as, for example, scroll bars, push buttons, check boxes, radio buttons, text panes and tab panel elements known in the form of tap strip control elements or, in short, tab panel elements. Most computer software applications available today provide GUIs to more efficiently interact with users.

Tap strips allow a user to easily and comprehensively define different object components of an application on one screen and to navigate between them. Tap strips are also used to select or to input criteria for use in execution of a logical function such as a search, filter, sifting, or the like. Examples can be seen in the documents US 5,963,938, US 2002/0059297 A1 and US 2004/0085362 A1. Tab strips are usually grouped to a set. They may act like the dividers in a notebook or the labels on a group of file folders. By using tab panel element controls, it is for example possible to define multiple pages for the same area of a window or dialog box in an application.

In contrast to the classic a screen change, the user at one glance sees all the destinations he must call to accomplish a given task. Using this technique, the user can comprehend the structure of an application more intuitively as with conventional techniques such as the GOTO menu. This reduces the learning expense and facilitates the usage. However, the content of all tap strips or sub screens are relevant and valid at the same time. Therefore, such tabs trips can not be used to provide excluding alternative conditions, information, parameters or definitions to an application.

The above description is based on the knowledge of the present inventors and not necessarily that known in the art.

### SUMMARY OF THE INVENTION

In view of the foregoing, it is a primary object of the present invention to provide a graphical user interface, which allows providing excluding alternative parameters to an application.
In accordance with the principles of the invention, as embodied and broadly described herein, an embodiment of the invention provides a graphical user interface for defining parameters for a process to be executed by a computer, the graphical user interface comprising:
- at least two tab panel elements, each tab panel element comprising input or selection means for choosing or entering a set of attributes or values or conditions usable to carry out the process,
- each set of attributes or values or conditions being different to and independent of the other sets
- only the set of attributes or values or conditions of a selected tab panel element being relevant for the process.

A further embodiment of the invention provides a graphical user interface for defining parameters for a process to be executed by a computer, the graphical user interface comprising:
- at least three tab panel elements each tab panel element comprising input or selection means for choosing or entering a set of attributes or values or conditions usable to carry out the process,
- each set of attributes or values or conditions being different to and independent of the other sets
- only the sets of attributes or values or conditions according to a subset of the at least three tab panel elements being relevant for the process.

By means of these GUIs it is easily possible for a user to provide different alternative conditions or variants, which are independent of each other to a software application for execution. The user may decide, e.g. by selecting the appropriate tab panel element, which variant to use. Only the selected parameters are then relevant for the further processing.
It is useful to incorporate embodiments of the invention, including the above, into software for executing processes, for example searches, scientific or economic calculations with different parameter sets, modeling and the like. Particularly useful is the incorporation into enterprise resource planning software.

Embodiments of the invention further relate to computer systems, computer programs, computer readable media and carrier signals, each comprising program code or instructions for presenting to a user the graphical user interfaces in accordance with the present invention and its embodiments.

Computer programs consistent with the invention can be installed as one or more programs or program modules on different hardware systems (computers or computer systems), and run separately and independently of each other, while in their entirety being capable of performing, for example, the graphical user interfaces and embodiments disclosed herein. The different systems may be connected in the form of a network to communicate with each other.

Additional objects and advantages of the various embodiments of the invention will be set forth in part in the description, or may be learned by practice of the invention. The objects and advantages of the embodiments of the invention will be realized and attained by means of the elements and combinations particularly pointed out in the claims. Embodiments of the invention are disclosed herein and set forth in the claims.
The various embodiments can include and/or exclude different aspects, features and/or advantages, where applicable. In addition, various embodiments can combine one or more aspects or features of other embodiments, where applicable.

It is to be understood that both the foregoing general description and the following detailed description are exemplary and explanatory only and are not restrictive of the embodiments of the invention, as claimed. The description of aspects, features and/or advantages of particular embodiments should not be construed as limiting other embodiments or the claims.

### BRIEF DESCRIPTION OF THE DRAWINGS

The accompanying drawings, which are incorporated in and constitute a part of this specification, illustrate embodiments of the invention and, together with the description, explain the principles of the invention. In the drawings,
Fig. 1 is a block diagram for illustrating an implementation an exemplary computer system consistent with an embodiment of the invention;
Figs. 2a to 2c illustrate an exemplary user interface consistent with an embodiment of the invention;
Fig. 2d illustrates a further exemplary user interface consistent with an embodiment of the invention;
Figs. 3a to 3c illustrate a still further exemplary user interface consistent with an embodiment of the invention.

### DESCRIPTION OF THE EMBODIMENTS

Within the concept of this disclosure, the terms used shall have their usual meaning in the context of the field of data processing unless defined otherwise. Particularly, a computer system broadly refers to any stand alone computer such as a PC or a laptop or a series of computers connected via a network, e.g. a network within a company, or a series of computers connected via the internet. Computer systems and programs may be closely related. As used herein, phrases, such as "the computer provides" and "the program provides or performs specific actions", "a user performs a specific action" are used to express actions by a computer system that may be controlled by a program or to express that the program or program module may be designed to enable the computer system to perform the specific action or to enable a user to perform the specific action by means of a computer system.

In this context, the term "automatically" is not intended to exclude a user's interactions with the computer system in the course of processing.
The term "data object" broadly refers to any date are in a database, which is identified by a key.

Further, within the concept of this disclosure, the term "process" shall be interpreted broadly. This means that the term is intended to refer not only to a plurality of actions or commands of program modules or the like, but also to a single action or command.

The described graphical user interfaces and other embodiments of the invention may be implemented by means of a computer system and software which allows the creation of business software applications and which allows the use of databases or database applications and Internet applications.

In an embodiment of the invention, all of the at least two tab panel elements are at least partially visible.

In a further embodiment, the at least two tab panel elements are adapted to allow a user to define a favorite tab panel element.
In a further embodiment, a start or continue functionality is available in each of the at least two tab panel elements.
The start or continue functionality may alternatively be placed outside the at least two tab panel elements. In this case it is adapted to apply to the selected tab panel element.
In a further embodiment, each tab panel element defines a different variant of the process.

In a further embodiment, the sets of attributes or values or conditions according to the tab panel elements of the subset of the at least three tab panel elements are combined by a logical AND or a logical OR or a logical XOR condition. Thus, the combination of the search conditions of and in the selected tab panel elements may be a logical AND or a logical OR or a logical XOR.

In a further embodiment, the selected tab panel element or tab panel elements are particularly marked up. This may be implemented by common techniques, e.g. by coloring, shadowing, using different line styles, different fonts and the like. Graying out unselected tab panel elements is also possible.

Processors suitable for the execution of a computer program include, by way of example, both general and special purpose microprocessors, and any one or more processors of any kind of digital computer. Generally, a processor will receive instructions and data from a read-only memory or a random access memory or both. The elements of a computer may include a processor for executing instructions and one or more memory devices for storing instructions and data. Generally, a computer will also include, or be operatively coupled to receive data from or transfer data to, or both, one or more mass storage devices (storage means) for storing data, e.g., magnetic, magneto-optical disks, or optical disks. Information carriers suitable for embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, embodiments of the invention can be implemented on a computer system having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or haptic feedback; and input from the user can be received in any form, including acoustic, speech, or haptic input.

Reference will now be made in detail to principles and exemplary embodiments of the invention by an explanation on the basis of a data processing process, examples of which are illustrated in the accompanying drawings.

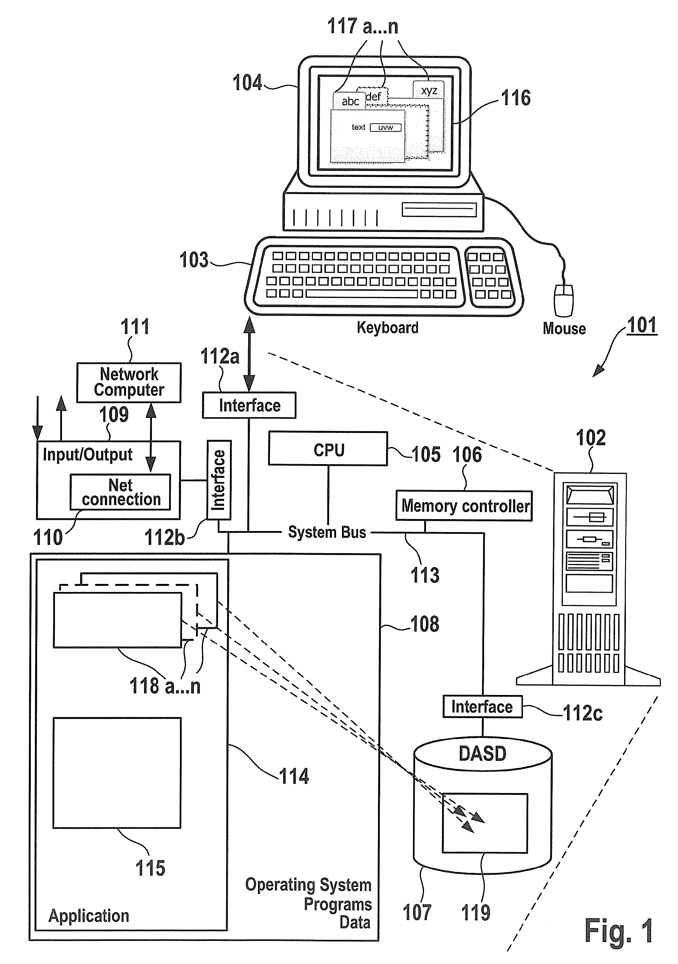

Referring now to FIG. 1, an exemplary computer system 101 is illustrated that comprises a computer 102 and operating means 103, 104. Those skilled in the art will appreciate that methods, systems and computer programs consistent with the present invention apply equally to any computer system, regardless of whether the computer system is a complicated multi-user computing apparatus or a single user device such as a personal computer or workstation. In the embodiment of FIG. 1, Computer 102 comprises a processor 105, main memory 108, a memory controller 106, an auxiliary storage interface 112c, a general input/output interface 112b and a terminal interface 112a, all of which are interconnected via a system bus 113. Note that various modifications, additions, or deletions may be made to computer system 101 illustrated in FIG. 1 such as the addition of cache memory or other peripheral devices. Hence, FIG. 1 is presented to simply illustrate some of the salient features of computer system 101.
Processor 105 may perform computation and control functions of computer system 101, and comprises a suitable central processing unit (CPU). Processor 105 may comprise a single integrated circuit, such as a microprocessor, or may comprise any suitable number of integrated circuit devices and/or circuit boards working in cooperation to accomplish the functions of a processor. Processor 105 may execute computer programs (e.g. object-oriented computer programs) within main memory 108.
Auxiliary storage interface 112c allows computer system 101 to store and retrieve information from auxiliary storage devices, such as a magnetic disk (e.g., hard disks or floppy diskettes) or optical storage devices (e.g., CD-ROM). One suitable storage device is a direct access storage device (DASD) 107. As shown in FIG. 1, DASD 107 may comprise a hard disk drive which may read programs and data from a hard disk. Note that while embodiments of the present invention are described in the context of a fully functional computer system, those skilled in the art will appreciate that the features of the present invention are capable of being distributed as a computer program product in a variety of forms, and that embodiments of the present invention apply equally regardless of the particular type of signal bearing media to actually carry out the distribution. Further examples of signal bearing media include: recordable type media such as floppy disks and CD ROMS, and transmission type media such as digital and analog communication links, including wireless communication links.
Memory controller 106, through use of a processor is responsible for moving requested information from main memory 108 and/or through auxiliary storage interface 112c to processor 105. While for the purposes of explanation, memory controller 106 is shown as a separate entity, those skilled in the art will understand that, in practice, portions of the function provided by memory controller 106 may actually reside in the circuitry associated with processor 105, main memory 108, and/or auxiliary storage interface 112c.
Terminal interface 112a allows system administrators, computer programmers or other end users to communicate with computer system 101, through, for example, monitor 104, keyboard 103, mouse, trackball and the like or through programmable workstations. Although the system 101 depicted in FIG. 1 contains only a single main processor 105 and a single system bus 113, it should be understood that the present invention applies equally to computer systems having multiple processors and multiple system buses. Similarly, although the system bus 114 of a preferred embodiment is a typical hardwired, multi-drop bus, any connection means that supports directional communication in a computer-related environment may be used.
Input/output interface 112b allows computer system 101 via processor 105 to communicate with general input/output means 109, including a network connection 110, for sending and/or receiving data, e.g. for a network connection with one or more further computer systems 111, or for sending or receiving of data to or from other parties. In one embodiment, a plurality of computer systems like computer system 101 can be connected via the connection 110 in the form of a network. In such a case, the network computers 111 can be used as further input/output means, including the use as further storage locations.

In one embodiment, memory 108 includes an operating system and an application 114, which includes modules for presenting a graphical user interface 116 according to the principles of the invention.

In one embodiment, such modules may comprise a module 115 for generating graphical user interface 116 and managing data input and/or selection via the graphical user interface 116. The graphical user interface 116 may comprise a plurality of tab panel elements 117a, 117... to 117n. The data entered and/or selected via these tab panel elements 117a...n may be stored in data objects 118a, 118... to 118n, which in turn may be stored in database 119.

It should be understood that memory 108 comprises "memory" in its broadest sense, and can include, for example, Dynamic Random Access Memory (DRAM), Static RAM (SRAM), flash memory, cache memory, etc. While not explicitly shown in FIG. 1, memory 108 may be a single type of memory component or may be composed of many different types of memory components. For example, memory 108 and CPU 105 may be distributed across several different computers that collectively comprise system 101. Further, it should also be understood that programs in memory 108 can include any and all forms of computer programs, including source code, intermediate code, machine code, and any other representation of a computer program.
In FIG. 1, the operating system stored in memory 108 may provide the basic functionality that controls the computer system 101. Operating system can comprise any suitable operating system, including commercially available operating systems such as IBM's OS/400, OS/2, Microsoft's Windows, Java and the various flavors of UNIX. The database 119 may provide the mechanism for persistently storing object data in the computer system 101, and can be any suitable form of database, including a relational database such as those commercially available from IBM, Oracle or Microsoft.

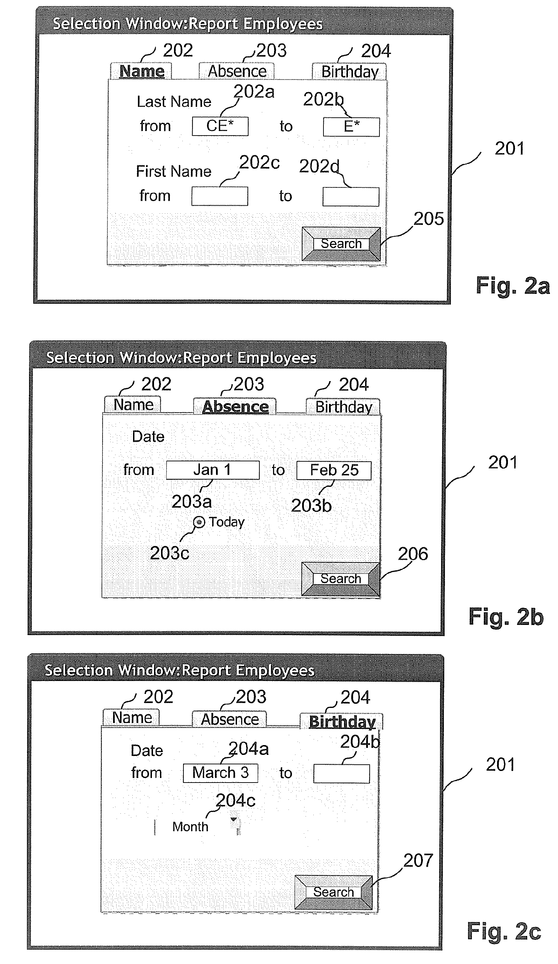

Referring now to figures 2a to 2c, a further embodiment of the invention is illustrated by way of a block diagram of an exemplary graphical user interface 201.

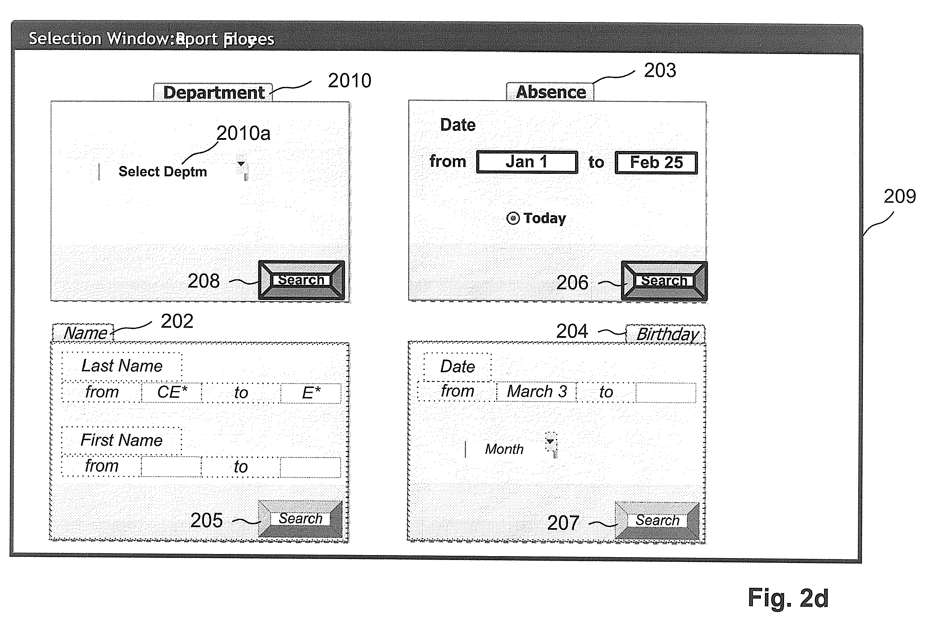

Figures 2a to 2c show the graphical user interface 201, which comprises three tab panel elements 202, 203 and 204. The three figures distinguish in that they show three different situations: in figure 2 a, tab panel element 202, titled "name" is selected and active. In figure 2b tab panel element 203, titled " absence" is selected and active, and in figure 2c tab panel element 204 is selected and active. The selected tab panel elements are marked up, in the example by a bold and underlined title. The graphical user interface 201 in this example provides a selection window for defining the parameters of a search to create a report on employees. Tab panel element 202 is designed in order to define a search according to the name of employees. It comprises four input fields 202a, 202b, 202c and 202d, which allow a user to input search criteria in order to search for ranges regarding last and first name. When applying button 205 on this tab panel element 202, the search is carried out according to only these criteria. What is entered in tab panel elements 203 and 204 does not influence this search.
Tab panel element 203 is designed in order to define a search according to the absence of employees. It comprises two input fields 203a, 203b and a radio button 203c. By way of the data fields 203a, 203b a range of absence dates may be defined. Alternatively or in addition, the date of "today" may be selected or added for the search. When applying button 2010 on this tab panel element 203, the search is carried out using only these criteria. What is selected in tab panel elements 202 and 204 does not influence this search.
Tab panel element 204 is designed in order to define a search according to birthday dates. It comprises to input fields 204a and 204b and a drop down menu 204c. By way of the two input fields 204a, 204b a range of dates may be defined for the search by a user. Alternatively, or in addition, a month may be defined as a further criteria by the user with drop down menu 204c. When applying button 207 on this tab panel element 204, a search on employees is carried out using only these criteria. What has been selected or entered in tab panel elements 202 and 203 does not influence this search.

Referring now to figure 2d, a further embodiment of the invention is illustrated by way of a block diagram of an exemplary graphical user interface 209. User interface 209 defers from user interface 201 in that a further tab panel element 2010 is available. Tab panel element 2010 is designed in order to define a further search criterion or further search criteria, which may be combined with other search criteria in the other tab panel elements 203, 204 and 205. The combination may be made effective e.g. by selecting the desired number of tab panel elements. In this example, tab panel elements 2010 and 203 are selected.

This selection is marked up by way of a title in bold letters and thicker lines. The unselected tab panel elements 205 and 204 may be marked up as well, in this example by cursive letters and dotted lines. In this example, the further search criterion made available by tab panel element 2010 is a department, which may be specified via drop-down menu 2010a. When applying either button 208 or 206 on one of the tab panel elements 203 or 2010, a search on employees is carried out using the search criteria of the selected tab panel elements. The combination of the search conditions of and in the selected tab panel elements may be a logical AND or a logical OR or a logical XOR.

Referring now to figures 3a to 3c, a further embodiment of the invention is illustrated by way of a block diagram of an exemplary graphical user interface 301.

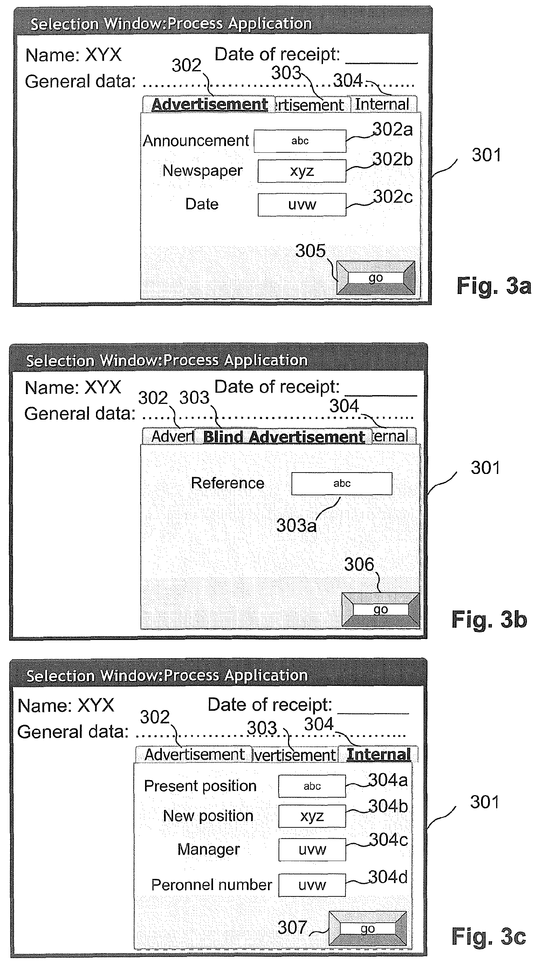

Figures 3a to 3c show the graphical user interface 301, which provides a selection window enabling a user to select one of one or more sub processes of a more general process end to start the selected sub process with specific parameters. In this example, the more general process is an application process within a company and the sub processes are: application by advertisement, application by blind advertisement and internal application. User interface 301 comprises a header section with general data of the applicant and three tab panel elements 302, 303 and 304, each tab panel element being designed to enable a user to start the respective sub process indicated in the title with specific data. The three figures 3a to 3c distinguish in that they show three different situations: in figure 3a tab panel element 302, titled "advertisement" is selected and active. In figure 3b tab panel element 303, titled "blind advertisement" is selected and active. In figure 3c tab panel element 304, titled "internal" is selected and active. The selected tab panel elements of marked up, in this example by a bold and underlined title. Tab panel element 302 is designed in order to define or enter the data for the sub process of application by advertisement and to start that sub process. It comprises three data fields 302a, 302b and 302c, in which data of a predefined meaning, in the example announcement, newspaper and date, may be entered or selected by a user. When applying button 305, the respective sub process is called with the data defined via tab panel element 302.
Tab panel element 303 (figure 3b) is designed in order to define or enter the data for the sub process of application by blind advertisement and to start that sub process. It comprises one data field 303a into which a reference may be entered. When applying button 306 of this tab panel element, the respective sub process is started with the data defined via this tab panel element.
Tab panel element 304 (figure 3c) is designed in order to define for enter the data for the sub process of internal application. It comprises four data fields 304a, 304b, 304c and 304d into which information relating to the present position of the applicant, his new position, his manager and/or his personnel number can be entered. When applying button 307 of this tab panel element, the sub process of internal application is started with this information.

Modifications and adaptations of the present invention will be apparent to those skilled in the art from consideration of the specification and practice of the embodiments and features disclosed herein. The foregoing description has been presented for purposes of illustration and description. It is not exhaustive and does not limit embodiments of the invention to the precise forms disclosed. Modifications and variations are possible in light of the above teachings or may be acquired from the practicing embodiments consistent with the invention. For example, the described implementation includes software, but systems and methods consistent with the present invention may be implemented as a combination of hardware and software or in hardware alone. Additionally, although aspects of the present invention are described as being stored in memory, one skilled in the art will appreciate that these aspects can also be stored on other types of computer-readable media, such as secondary storage devices, for example, hard disks, floppy disks, or CD-ROM; the Internet or other propagation medium; or other forms of RAM or ROM.

Computer programs based on the written description and flow charts of embodiments of the invention are within the skill of an experienced developer. The various programs or program modules can be created using any of the techniques known to one skilled in the art or can be designed in connection with existing software. For example, programs or program modules can be designed in or by means of Java, C++, HTML, XML, or HTML with included Java applets or in SAP R/3 or ABAP. One or more of such modules can be integrated in existing e-mail or browser software.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to." Further, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited.

Other embodiments of the invention will be apparent to those skilled in the art from consideration of the specification and practice of the invention disclosed herein. It is intended, therefore, that the specification and examples be considered as exemplary only, with a true scope and spirit of the invention being indicated by the following claims.

## Claims

1. A graphical user interface for defining parameters for a process to be executed by a computer, the graphical user interface comprising:
- at least two tab panel elements, each tab panel element comprising input or selection means for choosing or entering a set of attributes or values or conditions usable to carry out the process,
- each set of attributes or values or conditions being different to and independent of the other sets
- only the set of attributes or values or conditions of a selected tab panel element being relevant for the process.

2. The graphical user interface of claim 1, wherein all of the at least two tab panel elements are at least partially visible.

3. The graphical user interface of claim 1, wherein the at least two tab panel elements are adapted to allow a user to define a favorite tab panel element.

4. The graphical user interface of claim 1, wherein a start or continue functionality is available in each of the at least two tab panel elements.

5. The graphical user interface of claim 1, wherein each tab panel element defines a different variant of the process.

6. A graphical user interface for defining parameters for a process to be executed by a computer, the graphical user interface comprising:
- at least three tab panel elements each tab panel element comprising input or selection means for choosing or entering a set of attributes or values or conditions usable to carry out the process,
- each set of attributes or values or conditions being different to and independent of the other sets
- only the sets of attributes or values or conditions according to a subset of the at least three tab panel elements being relevant for the process.

7. The graphical user interface of claim 6, wherein the sets of attributes or values or conditions according to the tab panel elements of the subset of the at least three tab panel elements are combined by a logical AND or a logical OR or a logical XOR condition.

8. The graphical user interface of claim 1 or 6, wherein the selected tab panel element or tab panel elements are particularly marked up.

9. A computerized process comprising presenting to a user the graphical user interface of one of claims 1 to 8.

10. Computer software for performing a process, comprising program code for presenting to a user the graphical user interface of one of claims 1 to 8.

11. A computer adapted to select criteria for use in execution of a process, comprising a software according to claim 10.

12. A computer adapted to present a graphical user interface according to one of claims 1 to 8.

13. A computer readable medium comprising instructions for presenting to a user a graphical user interface according to any of claims 1 to 8 if said instructions are executed on a computer system.

14. A computer data signal embodied in a carrier wave comprising instructions for presenting to a user a graphical user interface according to any of claims 1 to 8 if said instructions are executed on a computer system.
